# EUROPÄISCHE PATENTSCHRIFT

(11) **EP 0 600 292 B1**
(45) Veröffentlichungstag und Bekanntmachung des Hinweises auf die Patenterteilung: **09.10.1996**
(21) Anmeldenummer: 93118429.5
(22) Anmeldetag: 15.11.1993
(51) Int. Cl.: C01D 13/00, C01B 17/22, C02F 1/52

(54) **Verfahren zur Herstellung einer stabilisierten, wässrigen Alkalitetrathiocarbonatlösung und deren Verwendung**
Process for producing a stabilised, aqueous solution of alkali metal tetrathiocarbonate and its use
Procédé pour la production d'un solution aqueuse stabilisée d'un tétrathiocarbonate d'un métal alcalin et son utilisation

(30) Priorität: 20.11.1992 DE 4239088
(43) Veröffentlichungstag der Anmeldung: 08.06.1994
(73) Patentinhaber: HOELZLE & CHELIUS GMBH, D-63234 Neu-Isenburg (DE)
(72) Erfinder: zum Hebel, Peter, Dr., D-61184 Karben (DE); Dillenburg, Helmut, Dr., D-47495 Rheinberg (DE); Ball, Susanne, D-46519 Alpen (DE); Helgers, Michael, D-46509 Xanten (DE)
(74) Vertreter: Lauer, Dieter, Dr.

(56) Entgegenhaltungen:
- WO-A-91/04944
- US-A- 2 893 835
- US-A- 4 678 584
- US-A- 4 943 377
- DATABASE WPI Week 8251, Derwent Publications Ltd., London, GB; AN 82-11111J/51 & SU-A-907 118 (UKR CELLULOSE PAPER) 6. Juni 1980
- A.SENNING (ED.) 'Topics in sulfur chemistry, Vol. 2: Carbon sulfides and their inorganic and complex chemistry' 1977 * Seite 154 - Seite 190 * * besonders Seite 173 - Seite 177 *

## Beschreibung

Die vorliegende Erfindung betrifft ein Verfahren zur Herstellung einer stabilisierten, wäßrigen Alkalitetrathiocarbonatlösung durch Umsetzung mindestens eines Alkalidisulfids mit Schwefelkohlenstoff (CS₂) in wäßriger Lösung.

Es ist bereits bekannt, toxische Schwer- und Buntmetalle aus Abwässern der metallverarbeitenden Industrie mit Hilfe von Alkalitrithiocarbonaten zu entfernen, wobei die gelösten Metallionen mit den Thiocarbonationen zu schwerlöslichen Verbindungen reagieren, die durch Filtration aus dem Abwasser abgetrennt werden können.

Fällverfahren, bei denen diese Trithiocarbonatverbindungen eingesetzt werden, besitzen gegenüber der hydroxidischen oder sulfidischen Fällung von gelösten Metallionen aus wäßrigen Lösungen vorteilhafte Eigenschaften: die Löslichkeitsprodukte der Schwermetalltrithiocarbonate sind so niedrig, daß selbst komplexgebundene Metallionen aus wäßrigen Lösungen nahezu quantitativ ausgefällt werden können, der Einfluß des pH-Wertes auf die Stabilitätskonstanten der Fällungsprodukte ist relativ gering, die gebildeten Niederschläge können auf einfache Weise aus dem Wasser abgetrennt werden und zudem tritt keine Emission von giftigem Schwefelwasserstoff auf, was bei der sulfidischen Fällung, insbesondere im sauren pH-Bereich, unvermeidlich ist.

Tetrathiocarbonationen bilden ebenfalls mit einer Reihe von Schwermetallen schwerlösliche Niederschläge. Die entsprechenden Verbindungen mit Alkalimetallen, wie Natrium oder Kalium, sind jedoch in Wasser leicht löslich. Alkalitetrathiocarbonate (Alkaliperthiocarbonate) werden nach Gmelins Handbuch der Anorganischen Chemie, Teilband "Natrium", Seiten 775 bis 777, durch Einwirkung von Schwefelkohlenstoff (CS₂) auf Natriumdisulfid in wäßriger Lösung erhalten. Tetrathiocarbonationen sind jedoch nur in trockner, CO₂-freier Luft stabil. In Gegenwart von Sauerstoff und Wasser zersetzen sie sich leicht zu Thiosulfat und in Gegenwart von Kohlendioxid zu Carbonat, Schwefel, CS₂ und Schwefelwasserstoff.

Eine wäßrige Lösung von Alkalitetrathiocarbonaten, die nach dem bekannten Verfahren erhalten wird, ist somit aufgrund ihrer geringen Lagerstabilität in einem großtechnischen Verfahren zur Entfernung von Schwermetallen aus Abwässern nur in unbefriedigender Weise einsetzbar, wobei insbesondere auch die Bildung von toxischen Oxidationsprodukten wie CS₂ und H₂S die Handhabung solcher Lösungen beeinträchtigt.

Weiterhin ist aus der oben genannten Literaturstelle, Seite 237, bekannt, daß Natriumdisulfid durch Umsetzung von NaOH mit Schwefel erhalten wird, wobei jedoch bei diesem Verfahren auch erhebliche Mengen an höheren Polysulfiden gebildet werden. Um das auf diese Weise hergestellte Natriumdisulfid zu polysulfidfreiem Natriumtetrathiocarbonat umsetzen zu können, müssen daher die Polysulfide erst durch aufwendige Reinigungsmaßnahmen aus dem Produktgemisch entfernt werden.

Aufgabe der vorliegenden Erfindung war es daher, ein einfaches, kostengünstiges Verfahren zur Herstellung einer lagerstabilen, wäßrigen Alkalitetrathiocarbonatlösung bereitzustellen, wobei das erfindungsgemäße Verfahren gut reproduzierbar sein und die Bildung von Nebenprodukten, insbesondere Polysulfiden, CS₂ und H₂S vermieden werden sollte. Des weiteren sollte das nach dem erfindungsgemäßen Verfahren hergestellte Alkalitetrathiocarbonat in hoher Konzentration in einer wäßrigen Lösung, die unmittelbar in der Abwasserreinigung eingesetzt werden kann, erhalten werden und die nahezu quantitative Abtrennung von gelösten, insbesondere auch komplexierten Schwermetallen in einem weiten pH-Bereich des zu behandelnden Wassers oder Abwassers erlauben.

Erfindungsgemäß wird diese Aufgabe durch ein Verfahren der eingangs genannten Art gelöst, das dadurch gekennzeichnet ist, daß in einer ersten Stufe elementarer Schwefel mit einer 5 bis 55 gewichtsprozentigen wäßrigen Alkalihydroxidlösung in einem Molverhältnis von Schwefel zu Alkalihydroxid (berechnet als Feststoff) von 1 : 0,9 bis 1 : 1,1 bei Temperaturen von 45 bis 110°C umgesetzt und die (nach der Umsetzung) erhaltene Lösung, die einen Gehalt an Alkalipolysulfid von mehr als 5 Gew.-% aufweist, auf eine Temperatur unter 40°C abgekühlt wird und nachfolgend in einer zweiten Stufe das gebildete Alkalipolysulfid, das nahezu vollständig aus Alkalidisulfid besteht, mit Schwefelkohlenstoff im quasi-stöchiometrischen Verhältnis zu Alkalitetrathiocarbonat umgesetzt und nach Beendigung der Reaktion die erhaltene wäßrige, Alkalitetrathiocarbonat enthaltende Lösung durch Zugabe einer wäßrigen Lösung mindestens einer alkalisch reagierenden Verbindung stabilisiert wird.

Nach einer vorzugsweisen Ausführungsform ist das erfindungsgemäße Verfahren durch folgende Merkmale gekennzeichnet: der elementare Schwefel wird mit einer 7 bis 20 gewichtsprozentigen wäßrigen Alkalihydroxidlösung in einem Molverhältnis von Schwefel zu Alkalihydroxid (berechnet als Feststoff) von 1 : 0,95 bis 1 : 1,05 bei Temperaturen von 50 bis 70°C umgesetzt, die erhaltene Lösung, die einen Gehalt an Alkalipolysulfid von 6 bis 16 Gew.-% aufweist, wird nach der Umsetzung auf eine Temperatur von 15 bis 35°C abgekühlt, das gebildete Alkalipolysulfid, das nahezu vollständig aus Alkalidisulfid besteht, wird unter Rühren mit Schwefelkohlenstoff in einem Molverhältnis Alkalipolysuflid/Schwefelkohlenstoff von 1 : 0,8 bis 1 : 1,2 versetzt, wobei die Zugabe an Schwefelkohlenstoff kontinuierlich verteilt über einen Zeitraum von 0,5 bis 6 Stunden, vorzugsweise 1 bis 3 Stunden, erfolgt, und nach Abstellen des Rührwerks wird die Lösung so lange stehengelassen, bis keine Phasentrennung mehr eintritt, und anschließend wird die erhaltene Lösung durch Zugabe von wäßriger Alkalihydroxidlösung auf pH 11 bis 14, vorzugsweise 11,5 bis 12,5, eingestellt.

Dem erfindungsgemäßen Verfahren liegt der Gedanke zugrunde, Alkalitetrathiocarbonate (Me^{I}₂CS₄, wobei Me ein einwertiges Alkalimetallion ist) durch eine einfache chemische Umsetzung in Form einer konzentrierten, stabilisierten wäßrigen Lösung herzustollen, wobei insbesondere durch die Gestaltung der Reaktionsführung und die Wahl der Ausgangsstoffe ein zuverlässiges, gut reproduzierbares, kostengünstiges Verfahren zur Verfügung gestellt wird, das ein preiswertes, hoch wirksames Schwermetall-Fällungsmittel in gleichbleibender Qualität liefert.

Ein weiterer wesentlicher Aspekt des erfindungsgemäßen Verfahrens war es, eine Produktlösung zu erhalten, die über einen längeren Zeitraum, vorzugsweise mehr als 12 Monate, stabil bleibt, so daß eine Zersetzung des Alkalitetrathiocarbonats während einer Lagerung oder des Transports vermieden wird.

Insbesondere sollte durch das erfindungsgemäße Verfahren sichergestellt werden, daß die erhaltene, Alkalitetrathiocarbonat enthaltende wäßrige Lösung frei oder nahezu frei von toxischen Nebenprodukten oder nicht umgesetzten Ausgangsstoffen, wie Polysulfiden, Schwefelwasserstoff, Schwefelkohlenstoff oder höheren Alkalipolythiocarbonaten, ist.

Es wurde nun gefunden, daß durch das erfindungsgemäße Verfahren eine wäßrige Alkalitetrathiocarbonatlösung hergestellt werden kann, die die vorgenannten Eigenschaften aufweist, sehr gut wasserlöslich ist und unmittelbar in der Behandlung von schwermetallhaltigen Abwässern in einem weiten pH-Bereich eingesetzt werden kann, wobei eine nahezu quantitative Fällung der gelösten, insbesondere auch komplexgebundener, Schwermetalle durch Bildung eines schwerlöslichen Niederschlags erreicht wird. Der gebildete, schwermetallhaltige Niederschlag kann mit einfachen Methoden aus dem behandelten Wasser oder Abwasser abgetrennt werden.

Um eine, von unerwünschten Nebenprodukten weitgehend freie Alkalitetrathiocarbonatlösung zu erhalten, wurde erfindungsgemäß festgestellt, daß insbesondere die strenge Einhaltung der stöchiometrischen Mengen an Alkalihydroxid und Schwefel sowie des gefundenen Temperaturbereiches erfindungswesentlich sind, denn diese Faktoren bestimmen die Disproportionierungsreaktion des Schwefels und haben damit unmittelbaren Ein-Einfluß auf die Menge an gebildetem Alkalidisulfid, insbesondere auf das Verhältnis von Alkalidisulfid zu weiteren Polysulfiden und Schwefel-Sauerstoff-Verbindungen, die ebenfalls in erheblichen Mengen entstehen können, was bei dem erfindungsgemäßen Verfahren vermieden werden soll.

Ein vorteilhaftes Merkmal der ersten Verfahrensstufe ist daher die erfindungsgemäße Herstellung einer alkalipolysulfidhaltigen wäßrigen Lösung, in der das Alkalipolysulfid nahezu vollständig aus Alkalidisulfid besteht. Dabei beträgt der Anteil an Alkalidisulfid (bezogen auf Alkalipolysulfid) mehr als 85 Gew.-%, insbesondere mehr als 90 Gew.-%.

Da die erhaltene wäßrige Alkalitetrathiocarbonatlösung gegenüber Luft unbeständig ist, war es ein weiteres Ziel des erfindungsgemäßen Verfahrens, die hergestellte Produktlösung gegen oxidativen Abbau zu schützen. Dieses Problem konnte erfindungsgemäß durch die Zugabe einer wäßrigen Lösung einer alkalisch reagierenden Verbindung, vorzugsweise einer Alkalihydroxidlösung, gelöst werden, wobei gefunden wurde, daß eine optimale Stabilisierung durch Einstellen des pH-Wertes der Lösung auf 11 bis 14, vorzugsweise 11,5 bis 12,5, erreicht wird.

Als stabilisierend wirkende wäßrige Lösung wird vorzugsweise eine wäßrige Natriumhydroxidlösung eingesetzt. Das eingesetzte Natriumhydroxid kann aber auch durch eine andere alkalisch wirkende Verbindung zumindest teilweise äquivalent ersetzt werden, vorzugsweise durch mindestens ein Alkalialuminat, insbesondere Natriumaluminat, und/oder eine quaternäre Ammoniumverbindung.

Ein weiterer Vorteil des erfindungsgemäßen Verfahrens liegt darin, daß bei der Umsetzung von Alkalihydroxid mit Schwefel Alkalithiosulfat (Me^{I}₂S₂O₃, wobei Me ein einwertiges Alkalimetallkation ist) gebildet wird, wodurch das hergestellte Verfahrensprodukt zusätzlich gegen Oxidation geschützt wird. Die nach dem erfindungsgemäßen Verfahren hergestellte wäßrige Alkalitetrathiocarbonatlösung weist daher vorteilhafterweise einen Gehalt an Alkalithiosulfat von 4 bis 10 Gew.-% auf.

Das erfindungsgemäße Verfahren wird vorzugsweise in einem Rührkessel durchgeführt, in dem zunächst der Schwefel in der wäßrigen Alkalihydroxidlösung, vorzugsweise einer wäßrigen Natriumhydroxidlösung, unter Rühren aufgeschlämmt wird. Die Temperatur wird dabei unter Verwendung einer Heizeinrichtung auf Werte von 45 bis 110°C, vorzugsweise 50 bis 70°C, eingestellt. Nach einer Reaktionszeit von 5 bis 50 Minuten hat sich der eingesetzte Schwefel vollständig aufgelöst und man erhält eine intensiv gefärbte Lösung, die einen Gehalt an Alkalidisulfid, vorzugsweise Natriumdisulfid (NaS₂), von mehr als 5 Gew.-%, insbesondere 6 bis 16 Gew.-%, aufweist. Anschließend wird die erhaltene Lösung auf eine Temperatur unter 40°C, vorzugsweise 15 bis 35°C, abgekühlt. Dies kann nach einer bevorzugten Ausführungsform des erfindungsgemäßen Verfahrens durch Zugabe von kühlerem Wasser oder einer anderen kühleren, gegenüber den Reaktionsedukten und -produkten (Alkalipolysulfid, Alkalitetrathiocarbonat, Alkalithiosulfat, CS₂) inerten Flüssigkeit erfolgen.

In einem zweiten Verfahrensschritt wird Schwefelkohlenstoff in den Reaktionsbehälter eingeleitet, wobei die Lösung insbesondere in diesem Reaktionschritt intensiv gerührt wird. Die zugegebene Menge an CS₂ wird dabei so gewählt, daß ein Molverhältnis von Alkalipolysulfid zu Schwefelkohlenstoff von etwa 1 : 1 (quasi-stöchiometrisch), vorzugsweise 1 : 0,8 bis 1 : 1,2, eingehalten wird. Es hat sich dabei als vorteilhaft herausgestellt, den Schwefelkohlenstoff kontinuierlich verteilt über einen Zeitraum von 0,5 bis 6 Stunden, insbesondere 1 bis 3 Stunden, in die Lösung einzuleiten. Nach vollständiger Zugabe der zuzusetzenden Menge an CS₂ wird das Rührwerk abgeschaltet und die wäßrige Lösung so lange stehengelassen, bis keine Phasentrennung mehr eintritt und sich der gesamte eingeleitete Schwefelkohlenstoff in der wäßrigen Phase gelöst hat. Die Umsetzung von CS₂ mit Alkalipolysulfid erfolgt bei dem erfindungsgemäßen Verfahren quantitativ, so daß die hergestellte Alkalitetrathiocarbonatlösung nur bei Einsatz eines geringen Überschusses an CS₂ gemäß den erfindungsgemäß einzusetzenden Molverhältnissen einen sehr geringen Gehalt an nicht umgesetztem Schwefelkohlenstoff aufweist.

Schließlich wird die erhaltene Lösung durch den Zusatz der alkalisch wirkenden Verbindung stabilisiert, indem vorzugsweise eine wäßrige Alkalihydroxidlösung, insbesondere eine wäßrige Natriumhydroxidlösung in einer solchen Menge zugesetzt wird, daß die wäßrige Alkalitetrathiocarbonatlösung aur einen pH-Wert von 11 bis 14, insbesondere 11,5 bis 12,5 eingestellt wird.

Des weiteren betrifft die vorliegende Erfindung ein Verfahren zur Behandlung von gelöste Schwermetalle enthaltenden wäßrigen Lösungen, insbesondere industriellen Abwässern, wobei die gelösten Schwermetalle aus dem zu behandelnden Wasser oder Abwasser durch Zugabe einer wäßrigen, insbesondere stabilisierten, Alkalitetrathiocarbonatlösung, vorzugsweise hergestellt nach dem erfindungsgemäßen Verfahren, in einer Menge von mehr als 2 mg Alkalitetrathiocarbonatlösung pro Milligramm gelöstes Schwermetall ausgefällt werden und der gebildete schwermetallhaltige Niederschlag aus dem behandelten Wasser oder Abwasser abgetrennt wird.

Das Verhältnis von das Fällungsmittel enthaltender Lösung zu den im Wasser oder Abwasser gelösten Schwermetallen wird vorzugsweise so eingestellt, daß bei Anwesenheit eines Komplexbildners ein molarer Überschuß an Alkalitetrathiocarbonat gegenüber den auszufällenden Schwermetallionen erhalten wird; bei Abwesenheit von Komplexbildnern kann auch eine unterstöchiometrische Menge an Alkalitetrathiocarbonat eingesetzt werden.

Überraschenderveise hat sich gezeigt, daß mit der eingesetzten stabilisierten, wäßrigen Alkalitetrathiocarbonatlösung eine nahezu quantitative Ausfällung von gelösten Schwermetallen aus einem Abwasserstrom erzielt werden kann, wobei insbesondere auch an Komplexbildner, wie beispielweise EDTA, gebundene Schwermetalle zu 99,6 % (bezogen auf die ursprünglich gelöste Gewichtsmenge an Schwermetallen in dem unbehandelten Wasser oder Abwasser) als leicht abtrennbarer Niederschlag ausgefällt werden.

Vorzugsweise wird ein optimales Fällungsresultat durch Zugabe von mehr als 8 mg wäßriger Alkalitetrathiocarbonatlösung pro Milligramm gelöstes Schwermetall erhalten. Je nach Art und Gehalt der Schwermetalle variieren die Dosiermengen im allgemeinen zwischen 3 und 12 mg pro mg Schwermetall; bei Anwesenheit von Komplexbildnern werden vorteilhafterweise auch höhere Mengen an Alkalitetrathiocarbonatlösung eingesetzt, um eine (nahezu) quantitative Ausfällung der komplexgebundenen Schermetalle zu ereichen. Die entsprechende Menge wird der Fachmann durch einfache Versuche leicht ermitteln können.

Mit dem erfindungsgemäßen Fällungsmittel können Wässer oder Abwässer behandelt werden, die vorzugsweise Metallionen, wie Nickel-, Cadmium-, Chrom-, Kupfer-, Quecksilber-, Blei- und/oder Zinkionen, enthalten. Der Restgehalt an den vorgenannten Schwermetallionen in dem behandelten Wasser oder Abwasser ist nach einer vorteilhaften Ausführungsform des erfindungsgemäßen Fällungsverfahrens kleiner als 0,1 mg/l.

Da durch das Tetrathiocarbonation Chrom-VI-Ionen in einem Wasser- oder Abwasserstrom zu Chrom-III-Ionen reduziert werden, können selbst diese schwer fällbaren Metalle in hohen Oxidationszahlen durch das erfindungsgemäße Fällungsverfahren aus einer wäßrigen Lösung abgetrennt werden.

Die hohe Wirksamkeit des Alkalitetrathiocarbonats als Fällungsmittel für Schwermetalle beruht auf der sehr stabilen chemischen Bindung zwischen dem Tetrathiocarbonation und einem zweiwertigen Metallkation, wobei Stabilität vermutlich aus der Bildung eines Fünfringes gemäß der Strukturformel 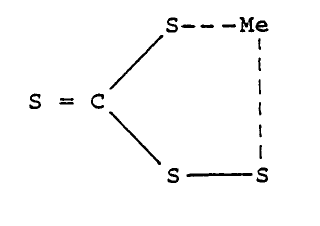 mit S = Schwefel, C = Kohlenstoff und Me = zweiwertiges Metallkation, resultiert.

Diese hohe Stabilität der Metall-Tetrathiocarbonat-Bindung bedingt das ausgezeichnete Fällungsvermögen von Tetrathiocarbonationen für Schwermetallionen, insbesondere auch aus den sehr stabilen Chelatkomplexen. Die Stabilitätskonstanten der Schwermetalltetrathiocarbonate nehmen in einem weiten pH-Bereich hohe Werte an, weshalb das erfindungsgemäß eingesetzte Fällungsmittel sowohl in schwach sauren wäßrigen Lösungen als auch in solchen mit hohem pH-Wert sehr wirksam ist.

Nach einer vorzugsweisen Ausführungsform wird das Fällungsverfahren in einem pH-Bereich des zu behandelnden Wassers oder Abwassers von 5 bis 11, insbesondere 7 bis 9, durchgeführt, wobei die größte Wirksamkeit des Fällungsmittels im etwa neutralen Medium erzielt wird.

Daher wird das zu behandelnde Wasser oder Abwasser nach einer vorzugsweisen Ausführungsform des erfindungsgemäßen Fällungsverfahrens durch Zusatz entsprechender Reagentien vor oder nach Zugabe des Fällungsmittels auf den vorgenannten pH-Bereich eingestellt.

Weiterhin hat sich eine Behandlungszeit von mehr als 10 Minuten, vorzugsweise mehr als 15 Minuten, als besonders bevorzugt herausgestellt.

Weiterhin hat es sich als vorteilhaft erwiesen, eine 10 bis 25 gewichtsprozentige Alkalitetrathiocarbonatlösung in der Wasser- oder Abwasserbehandlung einzusetzen, wobei sich insbesondere Natriumtetrathiocarbonatlösungen für das erfindungsgemäße Fällungsverfahren eignen.

Nach einer weiteren vorzugsweisen Ausführungsform des erfindungsgemäßen Fällungsverfahrens weist die wäßrige Alkalitetrathiocarbonatlösung einen pH-Wert von 11 bis 14, vorzugsweise 11,5 bis 12,5, auf. Die durch Zugabe eines basischen Reagens stabilisierte Alkalitetrathiocarbonatlösung, insbesondere Natriumtetrathiocarbonatlösung, wird bevorzugt in dem erfindungsgemäßen Fällungsverfahren eingesetzt, da sie eine hohe Lagerstabilität aufweist und somit als Verkaufsprodukt von gleichbleibender Qualität ist. Die erfindungsgemäß eingesetzte Alkalitetrathiocarbonatlösung kann jedoch auch ohne den stabilisierenden Zusatz unmittelbar nach ihrer Herstellung, vorzugsweise gemäß dem erfindungsgemäßen Herstellungsverfahren, in der Wasser- oder Abwasserreinigung eingesetzt werden.

Zur Stabilisierung der wäßrigen Alkalitetrathiocarbonatlösung wird vorteilhafterweise eine wäßrige Alkalihydroxidlösung, vorzugsweise eine wäßrige Natriumhydroxidlösung, eingesetzt. Dabei kann das eingesetzte Alkalihydroxid, insbesondere Natriumhydroxid, zumindest teilweise durch mindestens ein Alkalialuminat, vorzugsweise Natriumaluminat, und/oder eine quaternäre Ammoniumverbindung äquivalent ersetzt werden.
Durch den Gehalt an Alkalithiosulfat, vorzugsweise Natriumthiosulfat, in einer Menge von 4 bis 10 Gew.-% in der wäßrigen Alkalitetrathiocarbonatlösung wird das Fällungsmittel zusätzlich gegen Oxidation geschützt.

Dem zu behandelnden Wasser oder Abwasser kann außerdem zusätzlich zu dem erfindungsgemäßen Fällungsmittel ein kationisches und/oder anionisches Flockungshilfsmittel, vorzugsweise ein kationisches und/oder anionisches, modifiziertes Polyacrylat und/oder Polydiallyldimethylammoniumchloride, zugesetzt werden, um die Bildung von gut absitzenden, schwermetallhaltigen Flocken zu verbessern und zu beschleunigen. Der ausgefällte oder -geflockte schwermetallhaltige Niederschlag wird vorzugsweise durch Filtration aus dem behandelten Wasser oder Abwasser abgetrennt.

Das erfindungsgemäße Fällungsverfahren eignet sich vorzugsweise zur Behandlung von schwermetalhaltigen Abwässern aus der metall- oder oberflächenbearbeitenden Industrie, wie beispielsweise aus der Galvanotechnik, Elektro- und Leiterplattenindustrie und Kfz-Industrie, sowie aus REA- oder Müllverbrennungsanlagen.

Die nachfolgenden Ausführungsbeispiele sollen die Erfindung erläutern, ohne sie darauf zu beschränken.

### Ausführungsbeispiel zum Herstellungsverfahren:

56 g elementarer Schwefel werden in einen Rundkolben mit Rührwerk in 141 g Natronlauge (50 gew.-%ig) auf einem Heizbad unter Rückfluß und Rühren erhitzt. Nach ca. 30 Minuten hat sich die gesamte Schwefelmenge aufgelöst. Durch Zugabe von 640 g Wasser mit einer Temperatur von ca. 5°C wird die erhaltene Lösung auf ca. 20°C abgekühlt. Anschließend wird der Rundkolben mit einem Tropftrichter versehen, der mit 45 g Schwefelkohlenstoff gefüllt ist, und die gesamte Apparatur luftdicht verschlossen. Die vorgegebene CS₂-Menge wird innerhalb von 3 Stunden kontinuierlich unter ständigem Rühren zugesetzt. Um eine vollständige Umsetzung zu erreichen, wird die Flüssigkeit anschließend noch 2 Stunden lang weiter gerührt. Nach Abstellen des Rührwerks erhält man eine klare, gelborange Lösung, die mit 118 g Natronlauge (30 gew.-%ig) auf einen pH-Wert von 12 eingestellt und, falls erforderlich, filtriert wird.

### Ausführungsbeispiele zum Fällungsverfahren:

Die Fällungsversuche wurden mit der aus dem Herstellungsbeispiel erhaltenen Natriumtetrathiocarbonatlösung durchgeführt. Die Wirksamkeit der Schwermetallfällung durch Natriumtetrathiocarbonat wurde in Abwässern mit unterschiedlichen Gehalten an gelösten Schwermetallsalzen getestet, wobei Restkonzentrationen der einzelnen Schwermetallionen in dem behandelten Abwasser durch Atomabsorption ermittelt wurden. Die Zusammensetzungen der zu behandelnden Versuchsabwässer sind in Tabelle 1 aufgeführt.

### Abwasser 1:

Das Abwasser wurde mit 150 mg Natriumtetrathiocarbonatlösung pro mg gelöstes Schwermetall versetzt und anschließend mit Kalkmilch auf einen pH-Wert von 9,5 eingestellt. Zusätzlich wurde dem Abwasser zur schnelleren Flockenbildung ein kationischer Koagulant zugegeben. Die erhaltene wäßrige Lösung wurde 30 Minuten gerührt und anschließend mit einem anionischen Flockungshilfsmittel versetzt und filtriert.

### Abwasser 2:

Das Abwasser wurde mit Kalkmilch neutralisiert und mit 10 mg Natriumtetrathiocarbonatlösung pro mg gelöstes Schwermetall versetzt. Die erhaltene wäßrige Lösung wurde anschließend 30 Minuten gerührt. Nach Zugabe eines kationischen Flockungshilfsmittel wurde das behandelte Abwasser filtriert.

### Abwasser 3:

Das Abwasser wurde mit Kalkmilch neutralisiert und mit 40 mg Natriumtetrathiocarbonatlösung pro mg gelöstes Schwermetall versetzt. Zusätzlich wurde dem Abwasser zur schnelleren Flockenbildung ein kationischer Koagulant zugegeben und die erhaltene wäßrige Lösung anschließend 30 Minuten gerührt. Nach Zugabe eines anionischen Flockungshilfsmittel wurde das behandelte Abwasser filtriert.

### Abwasser 4:

Das Abwasser wurde mit Kalkmilch neutralisiert und mit 10 mg Natriumtetrathiocarbonatlösung pro mg gelöstes Schwermetall versetzt. Die erhaltene wäßrige Lösung wurde anschließend 30 Minuten gerührt. Nach Zugabe eines kationischen Flockungshilfsmittel wurde das behandelte Abwasser filtriert.

Die Fällungsergebnisse sind in Tabelle 2 aufgeführt.

**Tabelle 1**

| Schwermetall-Zusammensetzung der Abwässer 1 bis 4 vor der Behandlung nach dem erfindungsgemäßen Fällungsverfahren | | | | | | | | |
|---|---|---|---|---|---|---|---|---|
| Abwasser | Metall (mg/l) | | | | | | | EDTA |
| | Cd | Cr | Cu | Hg | Ni | Pb | Zn | |
| 1 | - | - | 100 | - | - | 10 | - | 1000 |
| 2 | - | 50 | 100 | - | - | - | 100 | - |
| 3 | - | - | - | 5 | 40 | - | 100 | - |
| 4 | 100 | - | - | - | 50 | - | - | - |

**Tabelle 2**

| Schwermetall-Zusammensetzung der Abwässer 1 bis 4 nach der Behandlung nach dem erfindungsgemäßen Fällungsverfahren | | | | | | | |
|---|---|---|---|---|---|---|---|
| Abwasser | Metall (mg/l) | | | | | | |
| | Cd | Cr | Cu | Hg | Ni | Pb | Zn |
| 1 | - | - | 0.1 | - | - | 0.3 | - |
| 2 | - | 0.01 | <0.01 | - | - | - | <0.01 |
| 3 | - | - | - | 0.001 | <0.01 | - | <0.01 |
| 4 | 0.03 | - | - | - | 0.09 | - | - |

## Patentansprüche

1. Verfahren zur Herstellung einer stabilisierten, wäßrigen Alkalitetrathiocarbonatlösung durch Umsetzung mindestens eines Alkalidisulfids mit Schwefelkohlenstoff (CS₂) in wäßriger Lösung, dadurch gekennzeichnet, daß in einer ersten Stufe elementarer Schwefel mit einer 5 bis 55 gewichtsprozentigen wäßrigen Alkalihydroxidlösung in einem Molverhältnis von Schwefel zu Alkalihydroxid (berechnet als Feststoff) von 1 : 0,9 bis 1 : 1,1 bei Temperaturen von 45 bis 110°C umgesetzt und die erhaltene Lösung, die einen Gehalt an Alkalipolysulfid von mehr als 5 Gew.-% aufweist, auf eine Temperatur unter 40°C abgekühlt wird und nachfolgend in einer zweiten Stufe das gebildete Alkalipolysulfid, das nahezu vollständig aus Alkalidisulfid besteht, mit Schwefelkohlenstoff im quasi-stöchiometrischen Verhältnis zu Alkalitetrathiocarbonat umgesetzt und nach Beendigung der Reaktion die erhaltene wäßrige, Alkalitetrathiocarbonat enthaltende Lösung durch Zugabe einer wäßrigen Lösung mindestens einer alkalisch reagierenden Verbindung stabilisiert wird.

2. Verfahren nach Anspruch 1, dadurch gekennzeichnet, daß elementarer Schwefel mit einer 7 bis 20 gewichtsprozentigen wäßrigen Alkalihydroxidlösung in einem Molverhältnis von Schwefel zu Alkalihydroxid (berechnet als Feststoff) von 1 : 0,95 bis 1 : 1,05 bei Temperaturen von 50 bis 70°C umgesetzt und die erhaltene Lösung, die einen Gehalt an Alkalipolysulfid von 6 bis 16 Gew.-% aufweist, auf eine Temperatur von 15 bis 35°C abgekühlt wird, das gebildete Alkalipolysulfid, das nahezu vollständig aus Alkalidisulfid besteht, unter Rühren mit Schwefelkohlenstoff in einem Molverhältnis von 1 : 0,8 bis 1 : 1,2 versetzt wird, wobei die Zugabe an Schwefelkohlenstoff kontinuierlich verteilt über einen Zeitraum von 0,5 bis 6 Stunden, vorzugsweise 1 bis 3 Stunden, erfolgt, und nach Abstellen des Rührwerks die Lösung so lange stehengelassen wird, bis keine Phasentrennung mehr eintritt, und anschliessend die erhaltene Lösung durch Zugabe von wäßriger Alkalihydroxidlösung auf pH 11 bis 14, vorzugsweise 11,5 bis 12,5, eingestellt wird.

3. Verfahren nach den Ansprüchen 1 oder 2, dadurch gekennzeichnet, daß die heiße, alkalipolysulfidhaltige Lösung durch Zugabe von kühlerem Wasser oder einer anderen kühleren, gegenüber den Reaktionsedukten und -produkten inerten Flüssigkeit abgekühlt wird.

4. Verfahren nach den Ansprüchen 1 oder 2, dadurch gekennzeichnet, daß Schwefel mit wäßriger Natriumhydroxidlösung umgesetzt wird.

5. Verfahren nach einem oder mehreren der Ansprüche 1 bis 4, dadurch gekennzeichnet, daß die hergestellte Alkalitetrathiocarbonatlösung einen Gehalt an Alkalithiosulfat von 4 bis 10 Gew.-% aufweist.

6. Verfahren nach einem oder mehreren der Ansprüche 1 bis 5, dadurch gekennzeichnet, daß zur Stabilisierung der wäßrigen Alkalitetrathiocarbonatlösung eine wäßrige Natriumhydroxidlösung eingesetzt wird.

7. Verfahren nach Anspruch 6, dadurch gekennzeichnet, daß das eingesetzte Natriumhydroxid zumindest teilweise durch mindestens ein Alkalialuminat, vorzugsweise Natriumaluminat, und/oder eine quaternäre Ammoniumverbindung äquivalent ersetzt wird.

## Claims

1. A method for producing a stabilised, aqueous alkali tetrathiocarbonate solution by reacting at least one alkali disulphide with carbon disulphide (CS₂) in aqueous solution, characterised in that in a first stage elemental sulphur is reacted with a 5 to 55% by weight aqueous alkali hydroxide solution in a molar ratio of sulphur to alkali hydroxide (calculated as solid) of 1 : 0.9 to 1 : 1.1 at temperatures of 45 to 110°C and the resulting solution, which has a content of alkali polysulphide of more than 5% by weight, is cooled to a temperature below 40°C and subsequently in a second stage the resulting alkali polysulphide, which consists virtually entirely of alkali disulphide, is reacted with carbon disulphide in a virtually stoichiometric ratio to form alkali tetrathiocarbonate and once the reaction has ended the resulting aqueous solution containing alkali tetrathiocarbonate is stabilised by adding an aqueous solution of at least one alkaline-reacting compound.

2. A method according to Claim 1, characterised in that elemental sulphur is reacted with a 7 to 20% by weight aqueous alkali hydroxide solution in a molar ratio of sulphur to alkali hydroxide (calculated as solid) of 1 : 0.95 to 1 : 1.05 at temperatures of 50 to 70°C and the resulting solution, which has a content of alkali polysulphide of 6 to 16% by weight, is cooled to a temperature of 15 to 35°C, the resulting alkali polysulphide, which consists virtually entirely of alkali disulphide, has added to it, with stirring, carbon disulphide in a molar ratio of 1 : 0.8 to 1 : 1.2, the addition of carbon disulphide taking place continuously over a period of 0.5 to 6 hours, preferably 1 to 3 hours, and once the stirrer has been switched off the solution is allowed to stand until no further phase separation occurs, and then the resulting solution is set to pH 11 to 14, preferably 11.5 to 12.5, by the addition of aqueous alkali hydroxide solution.

3. A method according to Claims 1 or 2, characterised in that the hot solution containing alkali polysulphide is cooled by the addition of cooler water or another cooler liquid which is inert to the reaction educts and products.

4. A method according to Claims 1 or 2, characterised in that sulphur is reacted with aqueous sodium hydroxide solution.

5. A method according to one or more of Claims 1 to 4, characterised in that the alkali tetrathiocarbonate solution produced has a content of alkali thiosulphate of 4 to 10% by weight.

6. A method according to one or more of Claims 1 to 5, characterised in that an aqueous sodium hydroxide solution is used for stabilising the aqueous alkali tetrathiocarbonate solution.

7. A method according to Claim 6, characterised in that the sodium hydroxide used is replaced equivalently at least in part by at least one alkali aluminate, preferably sodium aluminate, and/or a quaternary ammonium compound.

## Revendications

1. Procédé pour préparer une solution aqueuse stabilisée de tétrathiocarbonate alcalin par la réaction d'au moins un disulfure alcalin avec du sulfure de carbone (CS₂) en solution aqueuse, caractérisé en ce qu'en une première étape, on fait réagir, à des températures de 45°C à 110°C; du soufre élémentaire avec une solution aqueuse contenant 5 % à 55 % en poids d'hydroxyde alcalin, selon un rapport molaire entre le soufre et l'hydroxyde alcalin (calculé en matières solides) de 1:0,9 à 1:1, et l'on refroidit à une température inférieure à 40°C la solution obtenue ayant une teneur en polysulfure alcalin supérieure à 5 % en poids, puis dans une seconde étape, on fait réagir le polysulfure alcalin formé, qui consiste presque complètement en disulfure alcalin, avec du sulfure de carbone en une proportion quasi stoéchiométrique, pour obtenir du tétrathiocarbonate alcalin et, après achèvement de la réaction, on stabilise la solution aqueuse contenant du tétrathiocarbonate alcalin obtenue, en lui ajoutant une solution aqueuse d'au moins un réactif alcalin.

2. Procédé selon la revendication 1, caractérisé en ce qu'on fait réagir le soufre élémentaire avec une solution aqueuse contenant 7 % à 20 % d'hydroxyde alcalin, selon un rapport molaire du soufre à l'hydroxyde alcalin (calculé en matières solides) allant de 1:0,95 à 1:1:0,5) en opérant à des températures de 50°C à 70°C, et l'on refroidit à une température de 15°C à 35°C la solution obtenue, qui présente une teneur de 6 % à 16 % en poids de polysulfure alcalin, on ajoute en un rapport molaire de 1:0,8 à 1:1,2, sous agitation, du sulfure de carbone au polysulfure alcalin formé et qui consiste presque entièrement en disulfure alcalin, l'addition de sulfure de carbone étant réalisée en continu sur un espace de temps de 0,5 à 6 heures, avantageusement d'une à trois heures, et, après arrêt de l'agitateur, on laisse reposer la solution jusqu'à ce qu'il ne se produise plus de séparation des phases et, ensuite, on ajuste à pH 11 à 14, avantageusement, 11,5 à 12,5, le pH de la solution obtenue, par addition d'une solution aqueuse d'hydroxyde alcalin.

3. Procédé selon les revendications 1 ou 2, caractérisé en ce qu'on refroidit la solution chaude, contenant du polysulfure alcalin, en lui ajoutant de l'eau plus froide ou un autre liquide plus froid, inerte à l'égard de produits mis en oeuvre dans la réaction et des produits d'addition de cette réaction.

4. Procédé selon les revendications 1 ou 2, caractérisé en ce qu'on fait réagir le soufre avec une solution aqueuse d'hydroxyde de sodium.

5. Procédé selon une ou plusieurs des revendications 1 à 4, caractérisé en ce que la solution de tétrathiocarbonate alcalin produite présente une teneur en thiosulfate alcalin de 4 % à 10 % en poids.

6. Procédé selon une ou plusieurs des revendications 1 à 5, caractérisé en ce qu'on utilise une solution aqueuse d'hydroxyde de sodium, pour stabiliser la solution aqueuse de tétrathiocarbonate alcalin.

7. Procédé selon la revendication 6, caractérisé en ce que l'hydroxyde de sodium que l'on utilise est remplacé au moins partiellement par au moins un aluminate alcalin, avantageusement de l'aluminate de sodium, et/ou par un équivalent d'un composé d'ammonium quaternaire.
